# EUROPEAN PATENT SPECIFICATION

(11) **EP 1 968 845 B1**
(45) Date of publication and mention of the grant of the patent: **19.08.2009**
(21) Application number: 05850397.0
(22) Date of filing: 29.12.2005
(51) Int. Cl.: B62D 33/06, B62D 21/15

(54) **SUSPENSION UNIT AND INDUSTRIAL VEHICLE COMPRISING SUCH A UNIT**
AUFHÄNGUNGSEINHEIT UND INDUSTRIEFAHRZEUG DAMIT
MODULE DE SUSPENSION ET VEHICULE INDUSTRIEL EQUIPE DE CE MODULE

(43) Date of publication of application: 17.09.2008
(73) Proprietor: RENAULT TRUCKS, 69800 St Priest (FR)
(72) Inventor: DELAUCHE, Céline, 07200 Aubenas (FR)
(74) Representative: Putet, Gilles
(86) International application number: PCT/EP2005/014225
(87) International publication number: WO 2007/073771

(56) References cited:
- WO-A-03/101809
- WO-A-20/05035334
- US-B1- 6 520 565
- PATENT ABSTRACTS OF JAPAN vol. 2000, no. 23, 10 February 2001 (2001-02-10) -& JP 2001 151162 A (HINO MOTORS LTD), 5 June 2001 (2001-06-05)

## Description

### TECHNICAL FIELD OF THE INVENTION

This invention concerns a suspension unit for a cabin of an industrial vehicle. It also concerns an industrial vehicle comprising a cabin, a frame and such a suspension unit.

### BACKGROUND OF THE INVENTION

Industrial vehicles are usually provided with a cabin which is supported, with respect to a frame, by one or several suspension units which allow a relative movement of the cabin with respect to the frame essentially in an vertical direction and possibly in an horizontal direction. This improves the comfort of the cabin.

On the other hand, industrial vehicles should be safe for the driver and any person seated in the cabin, even in the case where a second vehicle collides the trailer of a first industrial vehicle running in front of it. In such a case, the frame of the second vehicle might go under the body of the trailer of the first vehicle, so that the cabin of the second vehicle might be crushed or distorted to an extent which might be dangerous for people seated in the cabin. In particular, the steering wheel or the dash board of the vehicle might move towards the seats of the cabin and hurt the driver.

In order to minimize this danger, it is known, e.g. from US-B-6,520,565 to mount a cabin of an industrial vehicle on a frame in such a way that it can slide with respect to this frame thanks to a deformation of a bodywork part which absorbs a shock. Such a structure is only possible for a rather lengthy cabin, in particular a cabin which includes a bed in its rear part. EP-A-1 477 391 teaches to add a cable to the connection means between a cabin and a frame. This cable is an extra equipment which makes more complicated and more expensive a vehicle comprising such a system. WO-A-03/101809 discloses a vehicle comprising a collapsible structure which breaks in case of collision. Once the structure is broken, a sudden deceleration of the cabin takes place.

Document JP 2001 151162 A discloses the preamble of claim 1.

### SUMMARY OF THE INVENTION

The invention aims at providing a new suspension unit which is adapted to allow a progressive deceleration of the cabin of an industrial vehicle in case of collision with a trailer of another vehicle.

The invention concerns a suspension unit for a cabin of an industrial vehicle, this unit comprising damping means and a suspension lever articulated on a frame of the vehicle and on the cabin, this lever being rigid under normal working conditions of the suspension unit. This unit is **characterized in that** the lever is extensible and adapted to extend in order to allow a relative displacement of the cabin with respect to the frame and in that the lever includes means to dissipate energy during its extension.

Thanks to the invention, the suspension lever works, under normal conditions, as a standard suspension lever and allows vertical movements of the cabin with respect to the frame. In case of a collision with a trailer of another vehicle running in front of a vehicle equipped with the unit of the invention, this lever extends in order to allow a backward movement of the cabin with respect to the frame, the energy dissipation means permitting to control the deceleration of the cabin, that is to progressively brake its movement with respect to the frame, so that people seated in the cabin are subjected to a bearable deceleration. The suspension lever is not a part which is added to the suspension unit with respect to the prior art since suspension levers already belong to classical suspension units.

According to further aspects of the invention, a suspension unit might incorporate one or several of the following features:
- the suspension lever is telescopic and includes at least a part sliding with respect to another part and means adapted to dissipate energy during the respective sliding of these parts,
- these energy dissipation means include sliding surfaces of these parts, these surfaces being frictionally in contact during respective sliding of these parts,
- the control means includes a spring attached to each of these parts,
- the spring is an expansion spring which expands during extension of the suspension lever,
- at least one of the parts includes an elongated slot whereas a connection member is adapted to slide within this slot,
- this member can be a bolt tightened so that it exerts a friction effort on these parts when the suspension lever extends,
- the suspension lever includes a cylinder and a rod movable with respect to the cylinder, this rod being fast with a piston sliding within an internal volume of the cylinder, this cylinder being substantially filled with a fluid adapted to resist to the movements of the piston within the cylinder,
- the suspension unit includes at least two parts which defined a volume for the reception of a spring which is contracted upon extension of said lever,
- the suspension unit includes means adapted to keep the first and second parts fast with respect to each other under normal working conditions of the suspension unit,
- the means adapted to keep the first and second parts fast with respect to each other include breakable connecting means installed between the first and second parts,
- these breakable connecting means are formed by bolts introduced within orifices formed in the first and second parts,
- the means adapted to keep these parts fast with each other include parts adapted to rest on corresponding portions of these parts and to slide on these portions and on some other portions of these parts under an effort of an intensity superior to a pre-set value.

The invention also concerns an industrial vehicle comprising a cabin and a frame **characterized in that** it also comprises at least a suspension unit as described here above.

Such an industrial vehicle is safer for the people seated in its cabin.

According to some advantageous aspects of the invention, such a vehicle might incorporate one or several of the following technical features:
- the vehicle includes two suspension units located between the cabin and the frame,
- the suspension unit(s) connect(s) the front part of the cabin to the frame of the vehicle, at least another suspension unit being provided to connect the rear part of the cabin to the frame.

### BRIEF DESCRIPTION OF THE DRAWINGS

The invention will be better understood on the basis of the following description which is given in correspondence with the annexed figures and an illustrative example, without restricting the object of the invention. In the annexed figures:
- Figure 1 is a partial scheme of an industrial vehicle according to the invention when it is running on a road under normal conditions,
- Figure 2 is a view similar to figure 1 in case of a collision between the vehicle and the trailer of another vehicle,
- Figure 3 is an enlarged view of a detail of figure 2, the lever being shown in a cut view,
- Figure 4 is a view similar to figure 3 for a truck incorporating a suspension unit according to a second embodiment of the invention,
- Figure 5 is a partial side view of a vehicle incorporating a suspension unit according to a third embodiment of the invention in a configuration corresponding to normal working conditions,
- Figure 6 is a longitudinal sectional view of a suspension lever of the unit of figure 5,
- Figure 7 is a longitudinal sectional view similar to figure 6, the suspension lever being in another configuration,
- Figure 8 is a side view of a suspension unit according to a fourth embodiment of the invention under normal working conditions, and
- Figure 9 is a side view of the suspension unit of figure 8 in another configuration.

### DETAILED DESCRIPTION OF SOME EMBODIMENTS

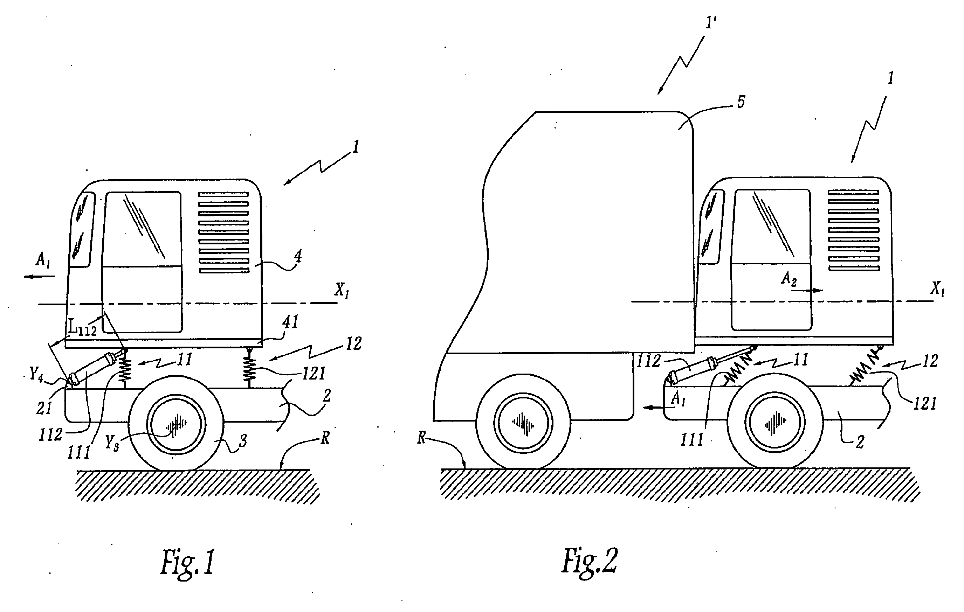

The truck 1 represented on figures 1 and 2 includes a frame 2 supported on the ground by several wheels, only one wheel 3 being represented. Truck 1 also includes a cabin 4 where the driver seats when truck 1 is running on a road R.

Cabin 4 is supported on frame 2 by two front suspension units 11 and two rear suspension units 12. Only one unit 11 and one unit 12 are shown on figure 1 but one such unit is provided close to each lateral side of frame 2 and cabin 4. According to another embodiment of the invention, only one such front suspension unit 11 could be provided.

Unit 12 includes a damper 121 interposed between a sub-frame 41 of cabin 4 and frame 2.

Unit 11 includes a damper 111 located between sub-frame 41 and frame 2 and a suspension lever 112 articulated on a bracket 21 fast with frame 2 and on a bracket 42 fast with sub-frame 41. Lever 112 is articulated on bracket 21 around a geometrical axis Y₂ which is perpendicular to a longitudinal axis X₁ of truck 1 and substantially parallel to the rotation axis Y₃ of wheel 3. Lever 112 is articulated on bracket 42 around a geometrical axis Y₄ parallel to axes Y₂ and Y₃.

Under normal working conditions of suspension units 11 and 12, that is when truck 1 runs on road R or on a track as shown by arrow A₁, dampers 111 and 121 damp vertical oscillations of cabin 4 with respect to frame 2. During these vertical oscillations, lever 112 pivots around axes Y₂ and Y₄ with respect to frame 2 and cabin 4. Under these normal working conditions, the length L₁₁₂ of lever 112, which can be considered as the distance between axes Y₂ and Y₄, remains constant.

When truck 1 collides the trailer 5 of another truck 1' running on road R in front of truck 1, cabin 4 has a backward movement with respect to frame 2 which goes on moving towards the front, as shown by arrow A₁ on figure 2. The backward movement on cabin 4 with respect to frame 2 corresponds to a sudden deceleration of cabin 4 and is represented by arrow A₂ on figure 2. This movement is possible because dampers 111 and 112 are breakable and because lever 112 is extensible, so that its length L₁₁₂ might increase in order to allow the backward and substantially horizontal movement A₂ of cabin 4 with respect to frame 2 while it remains connected to frame 2 and sub-frame 41.

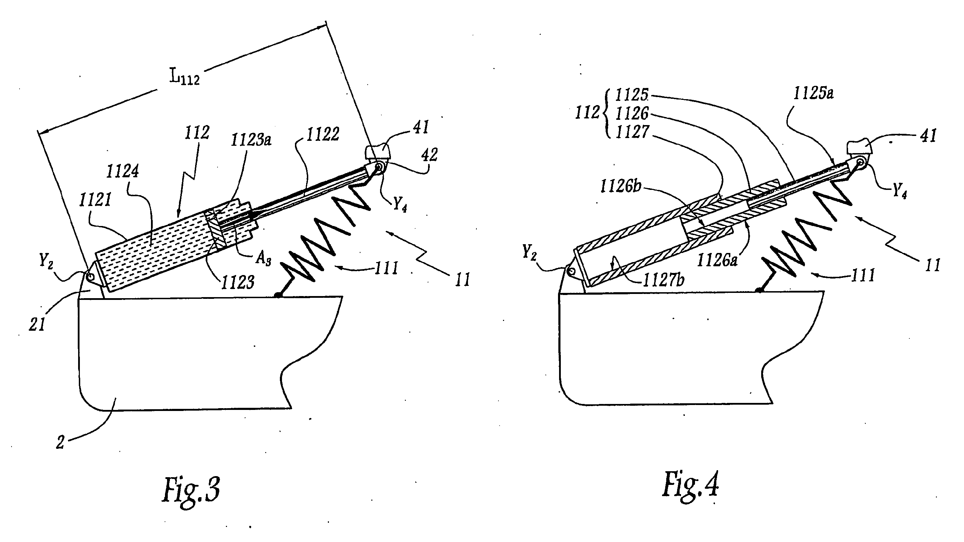

As shown in more details in figure 3, lever 112 includes a cylinder body 1121 articulated on bracket 21 around axis Y₂. Lever 112 also includes a rod 1122 extending from body 1121 and whose free end 1122a is articulated on bracket 42 around axis Y_{3.}

The end 1122b of rod 1122 which is introduced within body 1121 is fast with a piston 1123 adapted to slide within the inside volume of body 1121, this volume being filled with a quantity of oil 1124. Piston 1123 is provided with a hole 1123a through which oil circulates when piston moves in the direction of arrow A₃ when lever 112 extends.

Because of piston 1123, oil quantity 1124 in the internal volume of cylinder 1121 resists to the extension of lever 112 so that it absorbs and dissipates a part of the kinetic energy of cabin 4 when lever 112 extends, that is when cabin 4 moves backwards and horizontally with respect to frame 2. This allows to control the speed and deceleration of cabin 4 with respect to frame 2. In other words, lever 112 acts as a brake which progressively slows down cabin 4 in its movement with respect to frame 2. Therefore, the deceleration of cabin 4 because of the impact of trailer 5 is progressive.

The size of hole 1123a determines the maximum possible speed of piston 1123 within cylinder 1121 in case of a collision.

Because of the viscosity of oil 1124, lever 112 remains in the contracted configuration of figure 1, with a fixed length L₁₁₂, under normal working conditions of unit 11. Additional means can be provided to keep lever 112 in its contracted state.

In the second embodiment of the invention shown on figure 4, the same elements have the same references. The suspension unit 11 of this embodiment also includes a damper 111 which breaks in case of collision between the truck and the trailer of another truck. This unit also includes a suspension lever 112 articulated on the one hand on the frame 2 of the truck, around a transversal axis Y₂, and, on the other hand, on a sub-frame 41 of a cabin, around an axis Y₄ parallel to axis Y₂.

Lever 112 is telescopic and made of one rod 125 and two tubes 1126 and 1127. Rod 1125 slides within tube 1126 and tube 1126 slides within tube 1127. Tube 1127 is articulated around axis Y₂, whereas rod 1125 is articulated around axis Y₄.

The friction coefficient between the external surface 1125a of rod 1125 and the internal surface 1126b of tube 1126 is high. Moreover, the friction coefficient between the external surface 1126a of tube 1126 and the internal surface 1127b of tube 1127 is also high.

Because of these high friction coefficients, lever 12 remains in a contracted configuration, that is in a configuration similar to the one of lever 112 on figure 1 for the first embodiment, unless a high effort, sufficient to overcome the friction efforts between parts 1125, 1126 and 1127, is exerted onto cabin 4, such as the effort which occurs upon collision with the trailer of another truck, as represented on figure 2. In such a case, the friction between rod 1125 and tube 1126 on the one hand and, tube 1126 tube 1127 on the other hand, absorbs and dissipates a part of the kinetic energy of cabin 4, which allows to control the speed and deceleration of cabin 4 with respect to frame 2.

According to an embodiment of the invention which is not represented, lever 112 of this embodiment could be made of two parts only or of more than three parts.

According to another non represented embodiment of the invention, a spring can be located within lever 112 and extend between rod 125 and tube 127. Such a spring expands when lever 112 extends.

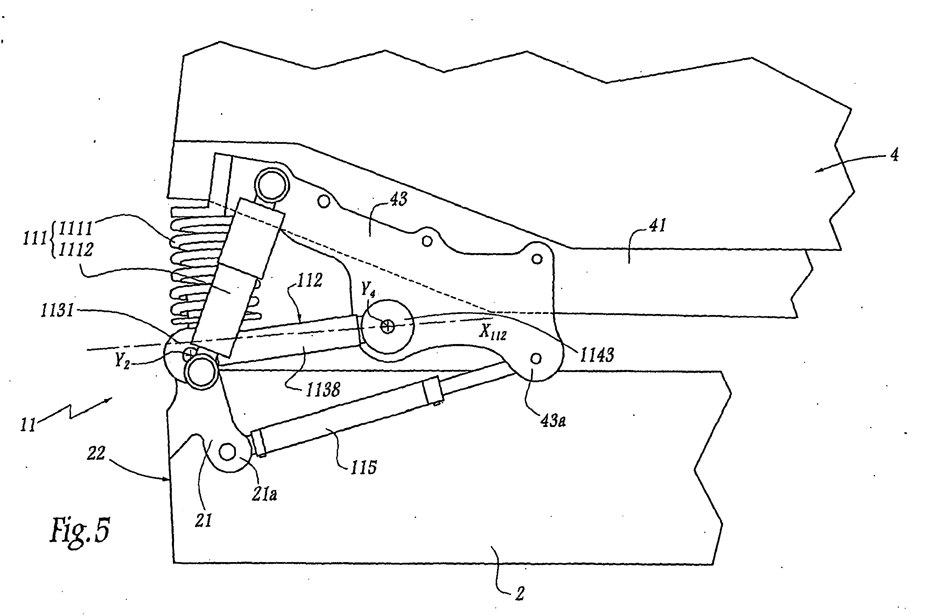

In the third embodiment of the invention represented on figures 5 to 7, the same elements as in the first embodiment bear the same references. Suspension unit 11 of this embodiment includes a damping structure 111 which includes a coil spring 1111 and a damping cylinder 1112. This damping structure 111 is interposed between a support member 43 which receives a sub-frame 41 of a cabin 4 of a truck and a front part 22 of the frame 2 of this truck.

A suspension lever 112 is pivotably connected on member 43, around an axis Y₄, and on a bracket 21, around an axis Y₂. Bracket 21 is fast with frame 2. Damping cylinder 1112 is also articulated on bracket 21.

Lever 112 comprises a first bracket 1131 articulated on bracket 21 around axis Y₂. A central core 1132 is fixedly mounted on bracket 1131 by a screw 1133. Core 1132 extends along the longitudinal axis X₁₁₂ of lever 112.

A first sleeve 1134 is mounted around core 1132 and comprises an annular part 1135 provided with a frustroconical or tapered internal edge 1135a adapted to lie against a frustroconical or tapered portion 1132a of core 1132. A compression spring 1136 is installed in an annular volume V₁ between the external surface 1132c of core 1132 and the internal surface 1134c of sleeve 1134. Spring 1136 is blocked within volume V₁ between part 1135 and a radial flange 1137 provided at the extremity 1132b of core 1132 opposite to bracket 1131.

A second sleeve 1138 is mounted around sleeve 1134 and comprises an annular part 1139 whose inner edge 1139a is frustroconical or tapered and comes into surface abutment with a frustroconical or tapered external portion 1134a of sleeve 1134, as edge 1135a with portion 1132a. A spring 1140 is located in an annular volume V₂ defined between the external radial surface 1134d of sleeve 1134 and the internal radial surface 1138d of sleeve 1138. A stopper 1141 is screwed within the extremity 1134b of sleeve 1134 opposite to bracket 1131. Spring 1140 is kept within volume V₂ thanks to annular part 1139 and a radial external flange 1142 of stopper 1141.

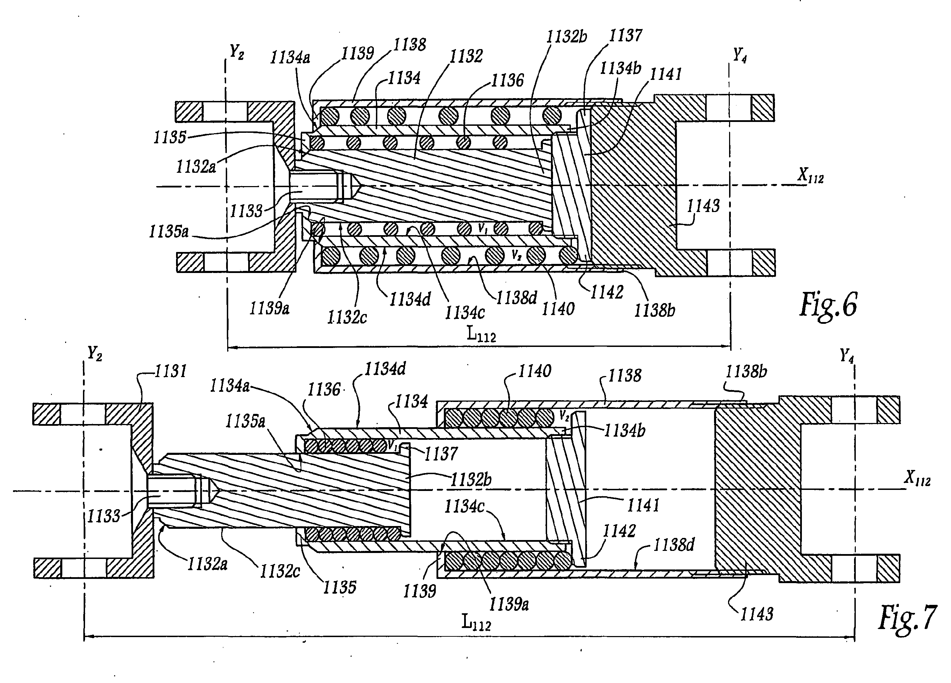

Another bracket 1143 is screwed in the extremity 1138b of sleeve 1138 opposite to annular part 1139. This bracket permits articulation of lever 112 around axis Y₄. The length L₁₁₂ of lever 112 can be considered as the distance between axes Y₂ and Y₄, as shown on figure 6.

As long as unit 11 works under normal conditions, length L₁₁₂ remains constant. Length L₁₁₂ cannot decrease since bracket 1143 bears against stopper 1141 which bears against core 1132. This length cannot increase since edges 1135a and 1139a bear against surfaces 1132a and 1134a.

In case of a collision of cabin 4 against the trailer of another truck, the screw connections between parts 1132 and 1133, 1141 and 1134, 1143 and 1138 remain effective. However, because of the intensity of the efforts exerted on brackets 1131 and 1143, annular parts 1135 and 1139 are deformed in order to escape from tapered portions 1132a and 1134a and to slide on surfaces 1132c and 1134d so that sleeve 1134 slides around core 1132 in a direction away from bracket 1131, whereas sleeve 1138 slides around sleeve 1134, in the same direction.

During this sliding motion, springs 1136 and 1140 are compressed respectively between part 1135 and flange 1137 and between part 1139 and flange 1142.

The sliding motion of sleeves 1134 and 1138 allows to reach the configuration of figure 7 where lever 112 is fully extended, its length L₁₁₂ being maximum.

The deformation of annular parts 1135 and 1139 and the compression of springs 1136 and 1140 allows to control the speed and acceleration of cabin 4 with respect to frame 2 by absorbing and dissipating a part of the kinetic energy of the cabin.

In other words, as long as the forces acting on brackets 1131 and 1143 to pull them away from each other are not higher to a pre-set value which depends on the structure of sleeves 1134 and 1138, length L₁₁₂ remains constant. If these forces are above this pre-set value, lever 112 extends and friction between edges 1135a and 1139a on one hand and the external surfaces 1132a, 1132c, 1134a and 1134c on the other hand dissipates energy, together with compression of springs 1136 and 1140.

A gas cylinder 115 connects a part 21a of bracket 21 to a rear extremity 43a of member 43. This cylinder 112 allows to tilt cabin 4 around axis Y₂ when maintenance operations are needed on the engine of truck 1 which is located below cabin 4.

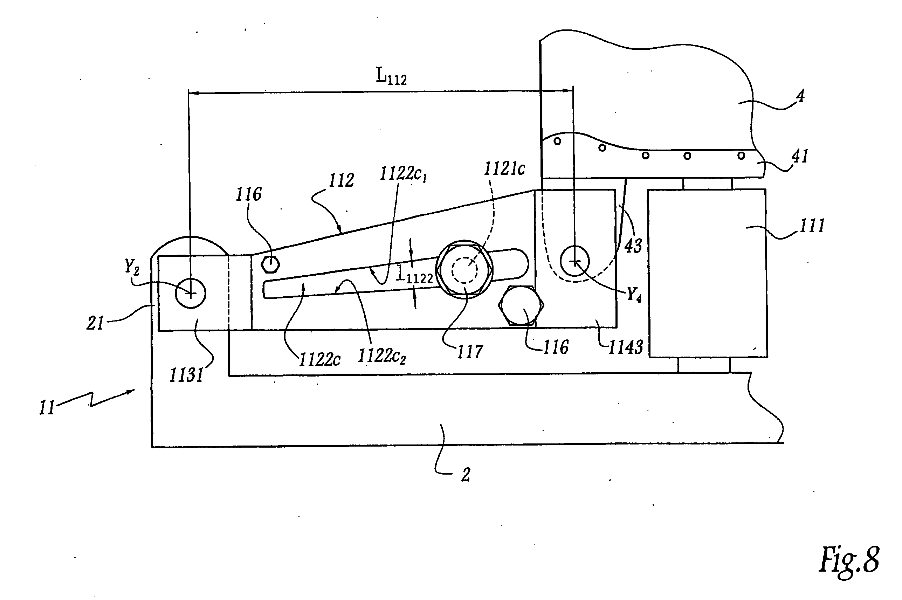

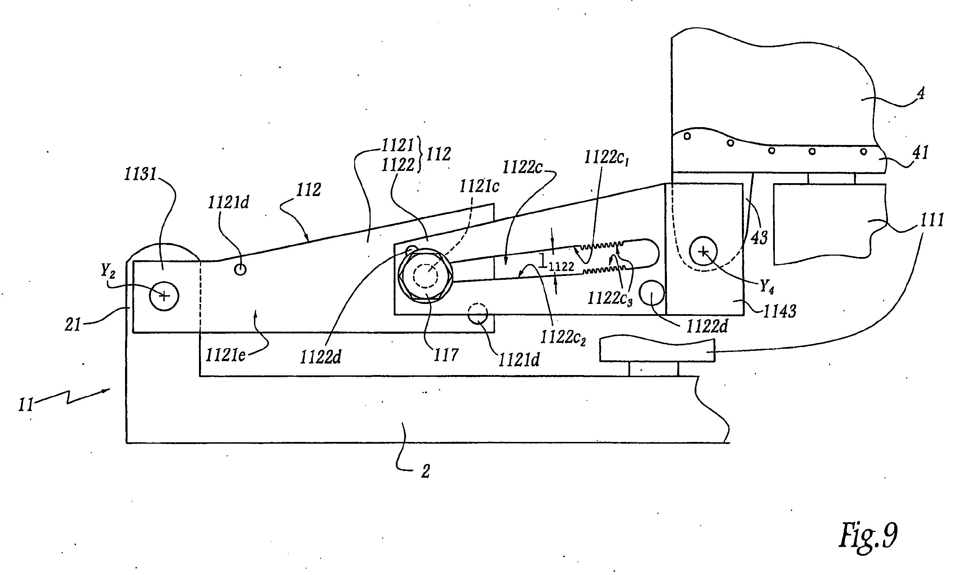

In the fourth embodiment of the invention represented in figures 8 and 9, the same elements as in the previous embodiments bear the same references. Suspension unit 11 of this embodiment includes a damper 111 and a suspension lever 112. This suspension lever includes a first part 1121 fast with a bracket 1131 pivotably mounted around a first axis Y₂, on a bracket 21 fast with respect to the frame 2 of the truck or lorry 1. Lever 112 also includes a second part 1122 pivotably mounted via a second bracket 1143 around a second axis Y₄ with respect to a support member 43 connected to a sub-frame 41 of a cabin 4 of a lorry. Damper 111 is located between frame 2 and support member 43.

Part 1121 is provided with a roughly central though hole 1121c and two lateral through holes 1121d located near two of its corners. Part 1122 is provided with a longitudinal slot 1122c and two through holes 1122d. Two breakable bolts 116 are inserted within through holes 1121 d and 1122d which are aligned when unit 11 is in its normal working condition represented on figure 8. In this condition, the length L₁₁₂ of lever 112, which can be considered as the distance between axes Y₂ and Y₄, is fixed. This length remains constant as long as no effort, superior to a pre-set value which corresponds to the breaking of bolts 116, is exerted on brackets 1131 and 1143 to pull them away from each other.

A bolt 117 is inserted within hole 121 c and slot 122c.

In case of a collision, as shown on figure 2, cabin 4 moves backwards with respect to frame 2, as shown by arrow A₂ on figure 9, and unit 11 changes from the configuration of figure 8 to the configuration of figure 9. This is possible because bolts 116 are broken and fall away from holes 1121d and 1122d. Bolt 117 remains in hole 121c and slot 122c. Bolt 117 is tightened in order to exert on parts 1121 and 1122 a compression effort which induces friction efforts between bolt 117 and these parts and between facing surfaces 1121e and equivalent of these parts when they slide one with respect to the other. This friction dissipates a part of the kinetic energy of cabin 4, which allows to control the speed and acceleration of the cabin during its backward movement represented by arrow A₂.

In order to further increase the energy absorption and dissipation effect obtained with this embodiment, slot 122c can be provided with teeth or other reliefs on its longitudinal edges 1122c₁ and 1122c₂, so that bolt 117 moves on these teeth or reliefs. Such teeth are partly represented, on figure 9 only, with referenced 1122c₃.

Moreover, the width I₁₁₂₂ of slot 1122c might vary on the length of this slot, which allows to dissipate or absorb energy by sliding of bolt 117 in different ways on the stroke of movement of cabin 4 during extension of lever 112.

According to a non represented embodiment of the invention, both parts 1121 and 1122 can be provided with a longitudinal slot similar to slot 1122c, which increases the extension capability of lever 112.

The technical features of the different embodiments represented on the figures can be combined within this invention, provided that this is technically possible.

### LIST OF REFERENCES

- 1: truck
- 1': truck
- 2: frame
21 bracket 21a part
- 3: wheel
- 4: cabin
- 41: sub-frame
- 42: bracket
- 43: support member 43a rear extremity of member 43
- 5: trailer
- 11: front suspension unit
111 damper or damping structure
1111 spring
1112 damping cylinder
- 112: suspension lever
1121 body or first part
1121a end
1121c through hole
1121d through hole
1121e surface
1122 rod or second part
1122a free end
1122b end
1122c slot
1122c₁ longitudinal edge of slot 1122c
1122c₂ longitudinal edge of slot 1122c
1122c₃ teeth on edges 1122c₁ and 1122c₂
1122d through hole
1122e surface
1123 piston
1124 oil quantity
1125 rod
1125a external surface of rod 1125
1126 tube
1126a external surface of tube 1126
1126b internal surface of tube 1126
1127 tube
1127b internal surface of tube 1127
1131 bracket
1132 core
1132a tapered portion
1132b extremity
1132c external radial surface
1133 screw
1134 sleeve
1134a tapered portion
1134b extremity
1134c internal radial surface
1134d external radial surface
- 1135: annular part
1135a inner edge
- 1136: spring
- 1137: flange
- 1138: sleeve
1138b extremity
1138d external radial surface
- 1139: annular part
1139a inner edge
- 1140: spring
- 1141: stopper
- 1142: flange
- 1143: bracket
- 115: gas cylinder
- 116: breakable bolts
- 117: bolt
- 12: back suspension unit
- 121: damper

- A₁: arrow
- A₂: arrow
- A₃: arrow
- L₁₁₂: length of lever 112
- I₁₁₂: width of slot 1122c
- R: road
- V₁: volume between core 1132 and sleeve 1134
- V₂: volume between sleeves 1134 and 1138
- X₁: longitudinal axis of truck 1
- X₁₁₂: longitudinal axis of lever 112
- Y₂: transverse axis of truck 1
- Y₃: axis of wheel 3
- Y₄: transverse axis of truck 1

## Claims

1. A suspension unit (11) for a cabin (4) of an industrial vehicle (1), said unit comprising damping means (111) and a suspension lever (112) articulated on a frame (2) of said vehicle and on said cabin, said lever being rigid under normal working conditions of said suspension unit, **characterized in that** said lever (112) is extensible and adapted to extend in order to allow a relative displacement (A₂) of said cabin (4) with respect to said frame (2) and **in that** said lever includes means (123, 124; 125a, 126a, 126b, 127b; 1135, 1136, 1139, 1140; 117, 1122c) to dissipate energy during its extension.

2. Suspension unit according to claim 1, **characterized in that** said suspension lever (112) is telescopic and includes at least a part (1122; 1125, 1126; 1134, 1138; 1122) sliding with respect to another part (1121; 1126, 1127; 1132; 1121) and means (1123, 1124; 1125a, 1126a, 1126b, 1127b; 1135, 1136, 1139, 1140; 117, 1122c) adapted to dissipate energy during respective sliding of said parts.

3. Suspension unit according to claim 2, **characterized in that** said energy dissipation means include sliding surfaces (1125a, 1126a, 1126b, 1127b; 1132a, 1134a, 1135a, 1139a; 1121e) of said parts (1121, 1122; 1125, 1126, 1127; 1132, 1134, 1139; 1121, 1122), said surfaces being frictionally in contact during respective sliding of said parts.

4. Suspension unit according to one of claims 2 or 3, **characterized in that** said means include a spring attached to each of said first and second parts (125, 127).

5. Suspension unit according to claim 4, **characterized in that** said spring is an expansion spring which expands during extension of said lever (112).

6. Suspension unit according to claim 2, **characterized in that** at least one of said first and second parts (1121, 1122) includes an elongated slot (1122c), whereas a connection member (117) is adapted to slide within said slot.

7. Suspension unit according to claim 6 **characterized in that** said connection member is a bolt (117) tightened so that it exerts a friction effort on said parts (1121, 1122) when said suspension lever (112) extends.

8. Suspension unit according to claim 2, **characterized in that** said suspension lever includes a cylinder (1121) and a rod (1122) movable with respect to said cylinder, said rod being fast with a piston (1123) sliding within an internal volume of said cylinder, said cylinder being substantially filled with a fluid (1124) adapted to resist to the movements of said piston within said cylinder.

9. Suspension unit according to claim 2 **characterized in that** said suspension lever (112) includes at least two parts (1132, 1134, 1138) which defines a volume (V₁, V₂) for the reception of a spring (1136, 1140) which is contracted upon extension of said lever.

10. Suspension unit according to one of claims 2 to 9, **characterized in that** it includes means (1123, 1124; 1125a, 1126a, 1126b, 1127b; 1132a, 1134a, 1135, 1139; 116, 1121d, 1122d) adapted to keep said parts (1121, 1122; 1125, 1126, 1127; 1132, 1134, 1138; 1121, 1122) fast with respect to each other under normal working conditions of said suspension unit (11).

11. Suspension unit according to claim 10, **characterized in that** said means include breakable connecting means (116) installed between said first and second parts (1121, 1122).

12. Suspension unit according to claim 11, **characterized in that** said breakable connecting means are formed by bolts (116) introduced within orifices (1121d, 1122d) formed in said parts (1121, 1122).

13. Suspension unit according to claim 10 **characterized in that** said means include parts (1135, 1139) adapted to rest on corresponding portions (1132a, 1134a) of said parts and to slide on said portions and on some other portions (1132c, 1134d) of said parts under an effort of an intensity superior to a pre-set value.

14. An industrial vehicle (1) comprising a cabin (4) and a frame (2) **characterized in that** it also comprises at least one suspension unit (11) according to one of the previous claims, said unit connecting said cabin (4) to said frame (2).

15. Industrial vehicle according to claim 14, **characterized in that** it includes two suspension units (11) according to one of claims 1 to 13, said units being located between said cabin (4) and said frame (2).

16. Industrial vehicle according to one of claims 14 or 15, **characterized in that** said unit(s) (11) connect(s) the front part of said cabin (4) to said frame (2), at least another suspension unit (12) being provided to connect the rear part of said cabin to said frame.

## Patentansprüche

1. Aufhängungseinheit (11) für eine Kabine (4) eines Industriefahrzeugs (1), wobei die Einheit eine Dämpfungseinrichtung (111) und einen Aufhängungshebel (112) umfasst, der an einem Rahmen (2) des Fahrzeugs und an der Kabine angelenkt ist, wobei der Hebel unter normalen Arbeitsbedingungen der Aufhängungseinheit starr ist, **dadurch gekennzeichnet, dass** der Hebel (112) verlängerbar und für eine Verlängerung geeignet ist, um eine relative Verschiebung (A₂) der Kabine (4) bezüglich des Rahmens (2) zu erlauben, und dass der Hebel Einrichtungen (123, 124; 125a, 126a, 126b, 127b; 1135, 1136, 1139, 1140; 117, 1122c) zur Energiedissipation während seiner Verlängerung einschließt.

2. Aufhängungseinheit nach Anspruch 1, **dadurch gekennzeichnet, dass** der Aufhängungshebel (112) telekospisch ist und zumindest ein Teil (1122; 1125, 1126; 1134, 1138; 1122), das bezüglich eines anderen Teils (1121; 1126, 1127; 1132; 1121) gleitet, und Einrichtungen (1123, 1124; 1125a, 1126a, 1126b, 1127b; 1135, 1136, 1139, 1140; 117, 1122c) aufweist, die für eine Energiedissipation während des jeweiligen Gleitens der Teile geeignet sind.

3. Aufhängungseinheit nach Anspruch 2, **dadurch gekennzeichnet, dass** die Energiedissipationseinrichtungen gleitende Oberflächen (1125a, 1126a, 1126b, 1127b; 1132a, 1134a, 1135a, 1139a; 1121 e) der Teile (1121, 1122; 1125, 1126, 1127; 1132, 1134, 1139; 1121, 1122) aufweisen, wobei die Oberflächen während des jeweiligen Gleitens der Teile in Reibungskontakt sind.

4. Aufhängungseinheit nach einem der Ansprüche 2 oder 3, **dadurch gekennzeichnet, dass** die Einrichtungen eine an jedem der ersten und zweiten Teile (125, 127) befestigte Feder aufweisen.

5. Aufhängungseinheit nach Anspruch 4, **dadurch gekennzeichnet, dass** die Feder eine Expansionsfeder ist, die sich während der Verlängerung des Hebels (112) ausdehnt.

6. Aufhängungseinheit nach Anspruch 2, **dadurch gekennzeichnet, dass** zumindest eines der ersten und zweiten Teile (1121, 1122) einen langgestreckten Schlitz (1122c) aufweist, während ein Verbindungselement (117) für ein Gleiten innerhalb des Schlitzes geeignet ist.

7. Aufhängungseinheit nach Anspruch 6, **dadurch gekennzeichnet, dass** das Verbindungselement eine Schraube (117) ist, die so festgezogen ist, dass sie eine Reibungsbeanspruchung auf die Teile (1121, 1122) ausübt, wenn der Aufhängungshebel (112) länger wird.

8. Aufhängungseinheit nach Anspruch 2, **dadurch gekennzeichnet, dass** der Aufhängungshebel einen Zylinder (1121) und eine bezüglich des Zylinder bewegliche Stange (1122) aufweist, wobei die Stange fest mit einem Kolben (1123) verbunden ist, der innerhalb eines Innenvolumens des Zylinders gleitet, wobei der Zylinder im Wesentlichen mit einem Fluid (1124) gefüllt ist, das geeignet ist, den Bewegungen des Kolbens innerhalb des Zylinders zu widerstehen.

9. Aufhängungseinheit nach Anspruch 2, **dadurch gekennzeichnet, dass** der Aufhängungshebel (112) zumindest zwei Teile (1132, 1134, 1138) aufweist, die ein Volumen (V₁, V₂) für die Aufnahme einer Feder (1136,1140) bilden, welche nach der Verlängerung des Hebels zusammengezogen wird.

10. Aufhängungseinheit nach einem der Ansprüche 2 bis 9, **dadurch gekennzeichnet, dass** sie Einrichtungen (1123, 1124; 1125a, 1126a, 1126b, 1127b; 1132a, 1134a, 1135, 1139; 116, 1121 d, 1122d) aufweist, die dafür geeignet sind, die Teile (1121, 1122; 1125, 1126, 1127; 1132, 1134, 1138; 1121, 1122) unter normalen Arbeitsbedingungen der Aufhängungseinheit (11) fest miteinander verbunden zu halten.

11. Aufhängungseinheit nach Anspruch 10, **dadurch gekennzeichnet, dass** die Einrichtungen zerbrechliche Verbindungseinrichtungen (116) aufweisen, die zwischen den ersten und zweiten Teilen (1121, 1122) installiert sind.

12. Aufhängungseinheit nach Anspruch 11, **dadurch gekennzeichnet, dass** die zerbrechlichen Verbindungseinrichtungen durch Schrauben (116) gebildet sind, die in in den Teilen (1121, 1122) ausgebildete Öffnungen (1121 d, 1122d) eingeführt sind.

13. Aufhängungseinheit nach Anspruch 10, **dadurch gekennzeichnet, dass** die Einrichtungen Teile (1135, 1139) aufweisen, die dafür geeignet sind, an entsprechenden Abschnitten (1132a, 1134a) der Teile anzuliegen und unter einer Beanspruchung mit einer zu einem voreingestellten Wert höheren Intensität auf den Abschnitten und auf einigen anderen Abschnitten (1132c, 1134) der Teile zu gleiten.

14. Industriefahrzeug (1) mit einer Kabine (4) und einem Rahmen (2), **dadurch gekennzeichnet, dass** es außerdem zumindest eine Aufhängungseinheit (11) gemäß einem der vorhergehenden Ansprüche umfasst, wobei die Einheit die Kabine (4) mit dem Rahmen (2) verbindet.

15. Industriefahrzeug nach Anspruch 14, **dadurch gekennzeichnet, dass** es zwei Aufhängungseinheiten (11) nach einem der Ansprüche 1 bis 13 aufweist, wobei sich die Einheiten zwischen der Kabine (4) und dem Rahmen (2) befinden.

16. Industriefahrzeug nach einem der Ansprüche 14 oder 15, **dadurch gekennzeichnet, dass** die Einheit(en) (11) den vorderen Teil der Kabine (4) mit dem Rahmen (2) verbindet/verbinden, wobei zumindest eine weitere Aufhängungseinheit (12) vorgesehen ist, um den hinteren Teil der Kabine mit dem Rahmen zu verbinden.

## Revendications

1. Unité de suspension (11) pour une cabine (4) d'un véhicule industriel (1), ladite unité comprenant des moyens d'amortissement (111) et un levier de suspension (112) articulé sur un châssis (2) dudit véhicule et sur ladite cabine, ledit levier étant rigide dans les conditions normales de fonctionnement de ladite unité de suspension, **caractérisée en ce que** ledit levier (112) est extensible et apte à s'étendre pour permettre un déplacement relatif (A₂) de ladite cabine (4) par rapport au dit châssis (2) et **en ce que** ledit levier comporte des moyens (123, 124 ; 125a, 126a, 127b ; 1135, 1136, 1139, 1140 ; 117, 1122c) pour dissiper de l'énergie pendant son extension.

2. Unité de suspension selon la revendication 1, **caractérisée en ce que** ledit levier de suspension (112) est télescopique et comporte au moins une partie (1122 ; 1125, 1126 ; 1134, 1138 ; 1122) qui coulisse par rapport à une autre partie (1121 ; 1126, 1127, 1132 ; 1121) et des moyens (1123, 1124 ; 1125a, 1126a, 1126b, 1127b ; 1135, 1136, 1139, 1140 ; 117, 1122c) aptes à dissiper de l'énergie pendant le coulissement respectif des dites parties.

3. Unité de suspension selon la revendication 2, **caractérisée en ce que** les moyens de dissipation d'énergie comportent des surfaces de coulissement (1125a, 1126a, 1126b, 1127b ; 1132a, 1134a, 1135a, 1139a ; 1121e) des dites parties (1121, 1122 ; 1125 , 1126, 1127 ; 1132, 1134, 1139 ; 1121, 1122), lesdites surfaces étant en contact avec frottement pendant le coulissement respectif des dites parties.

4. Unité de suspension selon l'une des revendications 2 ou 3, **caractérisée en ce que** lesdits moyens comportent un ressort attaché à chacune des dites première et seconde parties (125, 127).

5. Unité de suspension selon la revendication 4, **caractérisée en ce que** ledit ressort est un ressort de traction qui s'allonge pendant l'extension dudit levier.

6. Unité de suspension selon la revendication 2, **caractérisée en ce qu'**au moins l'une des première et seconde parties (1121, 1122) comporte une fente allongée (1122c), et **en ce qu'**un organe de connexion (117) est apte à coulisser dans ladite fente.

7. Unité de suspension selon la revendication 6, **caractérisée en ce que** ledit organe de connexion est un boulon (117) qui est serré de manière à exercer un effort de frottement sur les dites parties (1121, 1122) lorsque ledit levier de suspension (112) s'étend.

8. Unité de suspension selon la revendication 2, **caractérisée en ce que** ledit levier de suspension comporte un vérin (1121) et une tige (1122) qui est mobile par rapport au dit vérin, ladite tige étant solidaire d'un piston (1123) qui coulisse dans un volume interne du dit vérin, ledit vérin étant pratiquement rempli avec un fluide (1124) apte à résister au mouvement dudit piston dans ledit cylindre.

9. Unité de suspension selon la revendication 2, **caractérisée en ce que** ledit levier de suspension (112) comporte au moins deux parties (1132, 1134, 1138) qui définissent un volume (V₁, V₂) pour la réception d'un ressort (1136, 1140) qui est comprimé lors de l'extension dudit levier.

10. Unité de suspension selon l'une des revendications 2 à 9, **caractérisée en ce qu'**elle comporte des moyens (1123, 1124 ; 1125a, 1126a, 1126b, 1127b ; 1132a, 1134a, 1135, 1139 ; 116, 1121d, 1122d) aptes à maintenir lesdites parties (1121, 1122 ; 1125, 1126, 1127 ; 1132, 1134, 1138 ; 1121, 1122) solidaires l'une de l'autre dans les conditions normales de fonctionnement de ladite unité de suspension (11).

11. Unité de suspension selon la revendication 10, **caractérisée en ce que** lesdits moyens comportent des moyens de connexion cassables (116) installés entre lesdites première et deuxième parties (1121, 1122).

12. Unité de suspension selon la revendication 11, **caractérisée en ce que** lesdits moyens de connexion cassables sont formés par des boulons (116) introduits dans des orifices (1121d, 1122d) formés dans lesdites parties (1121, 1122).

13. Unité de suspension selon la revendication 10, **caractérisée en ce que** lesdits moyens comportent des parties (1135, 1139) aptes à reposer sur des portions correspondantes (1132a, 1134a) des dites parties et à coulisser sur les dites portions et sur d'autres portions (1132c, 1134d) des dites parties sous un effort d'une intensité supérieure à une valeur prédéterminée.

14. Véhicule industriel (1) comportant une cabine (4) et un châssis (2), **caractérisé en ce qu'**il comporte aussi au moins une unité de suspension (11) selon l'une des revendications précédentes, ladite unité reliant ladite cabine (4) au dit châssis (2).

15. Véhicule industriel selon la revendication 14, **caractérisé en ce qu'**il comporte deux unités de suspension (11) selon l'une des revendications 1 à 13, lesdites unités étant agencées entre ladite cabine (4) et ledit châssis (2).

16. Véhicule industriel selon l'une des revendications 14 ou 15, **caractérisé en ce que** ladite (lesdites) unité(s) (11) relie(nt) la partie avant de ladite cabine (4) au dit châssis (2), au moins une autre unité de suspension étant prévue pour relier la partie arrière de ladite cabine audit châssis.
